# EUROPEAN PATENT SPECIFICATION

(11) **EP 4 013 224 B1**
(45) Date of publication and mention of the grant of the patent: **28.10.2026**
(21) Application number: 20775441.7
(22) Date of filing: 14.08.2020
(51) Int. Cl.: A01M 23/38

(54) **ELECTRONIC RODENT TRAP WITH REMOTE MONITORING CAPABILITY**
ELEKTRONISCHE NAGETIERFALLE MIT MÖGLICHKEIT ZUR FERNÜBERWACHUNG
PIÈGE À RONGEURS ÉLECTRONIQUE À CAPACITÉ DE SURVEILLANCE À DISTANCE

(30) Priority: 14.08.2019 US 201916540455
(43) Date of publication of application: 22.06.2022
(73) Proprietor: Woodstream Corporation, Lancaster, PA 17602 (US)
(72) Inventor: KLETZLI, Paul, Akron, PA 17501 (US); EBNER, Mark, Davenport, FL 33896 (US); BLAIR, Cory, Denver, PA 17517 (US); KOZIAR, Peter, Lititz, PA 17543 (US); DALY, Thomas, J., Jr., Lititz, PA 17543 (US)
(74) Representative: Grünecker Patent- und Rechtsanwälte PartG mbB
(86) International application number: PCT/US2020/046279
(87) International publication number: WO 2021/030650

(56) References cited:
- WO-A1-2007/068971
- US-A- 5 953 853
- US-A1- 2014 300 477

## Description

### FIELD OF THE INVENTION

The present invention is related to the field of pest control and, more particularly, to an electronic rodent trap that demonstrates improved rodent interaction and dispatch and that has remote monitoring capability with improved reporting accuracy.

### DESCRIPTION OF THE RELATED ART

Electronic rodent traps have been available for many years. These traps typically have a single entrance door and are equipped with two or three killing plates which serve to both detect the rodent and deliver a high voltage pulse train to dispatch the rodent. Electronic rodent traps having two or three killing plates include those described in U.S. Patents Nos. 6,735,899 ("the '899 patent") and 7,219,466 ("the '466 patent"), which are owned by the assignee of the instant application. US 5,953,853 A discloses an electronic rodent trap with a trap body, a high voltage killing circuit, at least two oppositely charged lower killing plates in substantially parallel relationship on raised tracks separated by a longitudinally extending gap, and a sensor platform as a triggering element spaced inwardly from the entrance.

WO 2007/068971 A1 relates to a wireless monitoring system for pest traps but does not disclose modular trap construction.

One problem with many rodent traps is that rodents have a documented behavior of being cautious around, or completely avoiding, single entrance traps and bait boxes. Because of this behavior, having only a single entrance to a rodent trap can lead to lower interactions or complete trap avoidance.

Another problem with existing electronic rodent traps is that the plates are oriented in series so that, in a three killing plate configuration, the rodent first encounters plate one, then plate two and then plate three. Plates one and two are not energized by the high voltage circuit until the rodent contacts plate three. As a result, the trap may not be triggered if the rodent does not fully enter the trap. Alternatively, the trap may be triggered by a rodent that is not properly oriented within the trap, increasing the likelihood that the rodent will spring back when the high voltage is initiated and escape electrocution.

Yet another problem with currently deployed electronic rodent traps having remote monitoring capability is the propensity for false triggering of the trap due to environmental conditions, such as water, or trap interaction with a non-target species, such as upon insects entering the trap. When notifications of such false triggers are sent by the remotely reporting traps, time is wasted checking traps that have not, in fact, been triggered by a rodent. A remote wireless notification electronic rodent trapping system and method is disclosed in U.S. Patent No. 9,743,657 ("the '657 patent") which is also owned by the assignee of the present invention. The complete disclosure of the '657 patent is hereby expressly incorporated by reference herein as if fully set forth in its entirety.

Finally, it would be advantageous if electronic rodent traps with remote monitoring capability could be monitored over a wide geographic area without requiring a complex infrastructure in order to provide greater flexibility and faster system set up.

Accordingly, a need exists for an electronic rodent trap that is more likely to be entered by a rodent and that, upon such entry, is more likely to effectively dispatch the rodent through better plate arrangement and related trap structural design features. A need also exists for an electronic rodent trap with remote monitoring capability that is both more robust in operation and less susceptible to false triggers so as to reduce the number of incorrect notifications sent to the user as a result of environmental conditions and/or non-rodent interactions with the trap while also being able to communicate over a wider geographic range.

### SUMMARY OF THE INVENTION

The invention provides an electronic rodent trap according to claim 1, a method of operating a modular electronic rodent trap according to claim 5 and a remote notification electronic rodent trapping system according to claim 8. Preferred embodiments are provided in the dependent claims.

These together with other objects and advantages which will become subsequently apparent reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 is a perspective view of an electronic rodent trap in accordance with a first embodiment of the present invention, shown with part of one side removed to expose the trap interior.
Figure 2 is another perspective view of the trap shown in Figure 1 in which the entire one side and lid have been removed.
Figure 3 is a partial end perspective view of the trap shown in Figure 1, showing the lower plates with the upwardly bent inner edges and entry baffle.
Figure 4 is an end view of the trap shown in Figure 1, also showing the lower plates with the upwardly bent inner edges and entry baffle.
Figure 5 is a top view taken along line A-A of Figure 4, showing the lower killing plates and central channel.
Figure 6 is a side cut-away perspective view of the trap shown in Figure 1, showing the bait cup positioned in the hollow interior of a V-shaped center baffle.
Figure 7 is a cross-sectional view taken along line A-A of Figure 2, showing the vented center baffle and upwardly bent lower plates.
Figure 8 is a partial upper perspective view of the center of the trap with the lid removed to show the bait cup inside the center baffle in accordance with the trap embodiment shown in Figure 6.
Figure 9 is a perspective view of a modular electronic rodent trap having an outer housing, electronics module and tunnel module in accordance with a preferred embodiment of the present invention.
Figure 10 is a perspective view of the modular trap shown in Figure 9 with the lid of the outer housing closed.
Figure 11 is an isolated perspective view of the outer housing of the trap shown in Figure 9, with lid open.
Figure 12 is an isolated perspective view of the electronics module of the trap shown in Figure 9 showing a power-on button, a wireless connection indicator and an LED power indicator.
Figure 13 is another perspective view of the electronics module shown in Figure 12, showing the electrical contacts on the inner side wall of the electronics module housing.
Figure 14 is an isolated perspective view of the tunnel module of the trap shown in Figure 9, showing the electrical contacts that mate with the electrical contacts on the electronics module shown in Figure 13.
Figure 15A is an exploded perspective view of the tunnel module shown in Figure 14.
Figure 15B shows the cover plate of the tunnel module in the process of being nested within the tunnel base of the tunnel module shown in Figure 15A.
Figure 16 is an end view taken along line A-A of Figure 14.
Figure 17 is an upper perspective view of the tunnel module shown in Figure 14 with the side wall that faces the electronics module having been removed.
Figure 18 is a top view of the lower killing plates of the tunnel module shown in Figure 17.
Figure 19 is a perspective end view of the tunnel module shown in Figure 14.
Figure 20 is an end view of the tunnel module shown in Figure 19.
Figure 21A is a perspective view of the bait cup used with the tunnel module shown in Figure 14.
Figure 21B is an upper perspective view of the bait cup shown in Figure 21A but as opened to place bait therein.
Figure 21C is a top view of the bait cup mounted in the opening in the cover panel of the tunnel assembly shown in Figure 14.
Figures 22A-22C are upper perspective views showing in three stages how to remove the tunnel assembly and electronics module of the modular electronic rodent trap shown in Figure 9.
Figure 23 is a block diagram of the modular electronic rodent trap including a safety switch for the outer housing lid that acts to configure the electronics module for operation as a mouse trap or as a rat trap depending on switch contact engagement.
Figure 24 is a flow chart of a method of operating and monitoring electronic rodent traps of the types disclosed herein in accordance with the present invention.
Figure 25 is a block diagram of a long range wireless remote notification electronic rodent trapping system within which any of the foregoing electronic rodent trap embodiments may be implemented in accordance with the present invention.
Figure 26 is a block diagram of one of the traps and the gateway shown in Figure 25.
Figure 27 is a block diagram of a LPWAN illustrating various communication protocols that may be selected in creating the network in accordance with the present invention.
Figure 28 is a flowchart of the method of operating the long range wireless remote notification electronic rodent trapping system and method in accordance with the present invention.

### DETAILED DESCRIPTION OF THE PREFERRED EMBODIMENTS

It is to be understood that the embodiments described herein are disclosed by way of illustration only. It is not intended that the invention be limited in its scope to the details of construction and arrangement of components set forth in the following description or illustrated in the drawings. Also, in describing the preferred embodiments, specific terminology will be resorted to for the sake of clarity. It is to be understood that each specific term includes all technical equivalents which operate in a similar manner to accomplish a similar purpose.

Further, the electronic rodent trap according to the present invention may be configured as a mouse trap or as a rat trap with appropriate adjustments in sizing, dimensions, power output and the like as would be understood by persons of skill in the art as being required for the differences in rodent size and hardiness. Therefore, in the absence of a specific description pertaining to only one version or configuration of the trap, the following description is intended to cover both mouse trap and rat trap versions of each of the embodiments described herein.

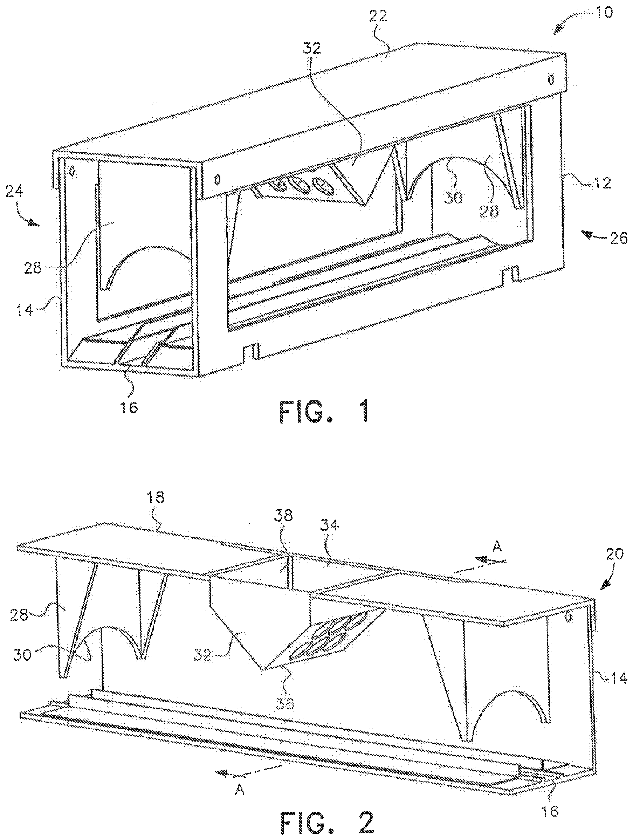

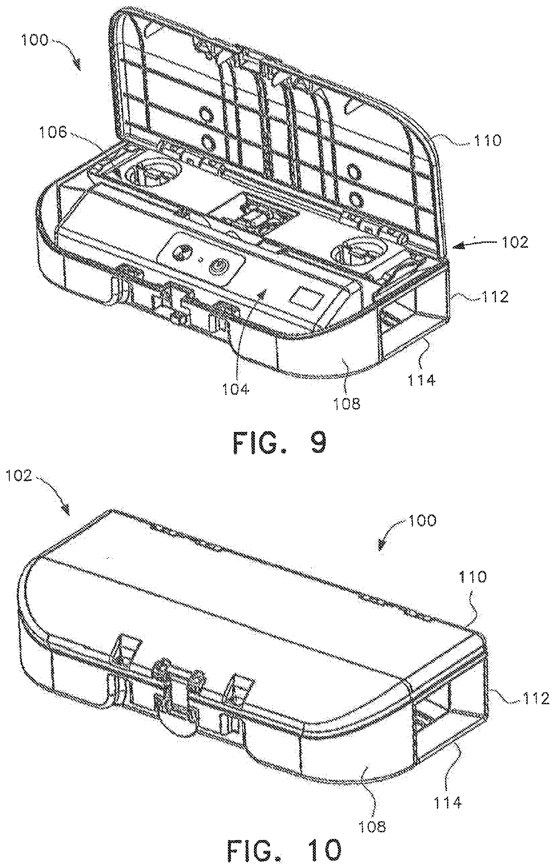

As shown in Figure 1, the present invention is directed to an electronic rodent trap generally designated by reference numeral 10. The trap 10 includes two side walls 12, 14, a floor 16, and a ceiling 18 (see Figure 2) that define a trap body generally designated by reference numeral 20. In Figure 1, part of side wall 12 is cut away to show the interior of the trap. In use, the ceiling of the trap body is preferably covered by a removable lid 22, such as when the trap is configured with a modular structure having an outer housing as will be described later herein in connection with Figures 9-23.

In the embodiment shown in Figures 1-8, the trap body extends longitudinally with a first entrance generally designated by reference numeral 24 and a second entrance generally designated by reference numeral 26 on opposing ends thereof. The entrances 24, 26 are preferably aligned with one another to create a tunnel which allows a rodent to see longitudinally through the trap from one entrance to the other. This visibility encourages rodent interaction with, and ingress into, the trap. However, the trap according to the instant invention is not intended to be limited to a tunnel-shaped trap or even to traps having more than one entrance as the killing plate configuration and other features to be described herein may also be used in traps having only a single entrance. So, more generally, the present invention includes an electronic rodent trap including a trap body or housing having two side walls, a lid or ceiling, and a floor with at least one trap entrance, a longitudinal length of the trap body being greater than a width thereof and extending from the trap entrance to an opposite end, with the opposite end preferably having a second entrance.

A generally vertical entry baffle 28 is positioned adjacent and inwardly of each trap entrance. Each entry baffle 28 extends downwardly from the ceiling 18 toward the floor 16 and preferably has a generally semi-circular cutout that forms an arch-shaped lower edge 30. This particular shape is not necessary, however. The entry baffles 28 serve to assist in positioning the rodent properly to make the trap most effective and also limit the rodent's range of movement once the trap is triggered as will be discussed further hereinafter.

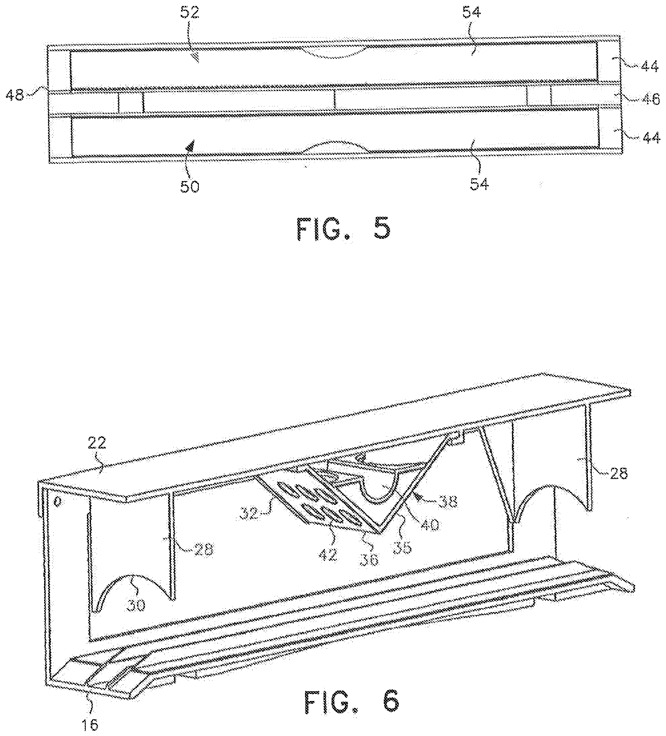

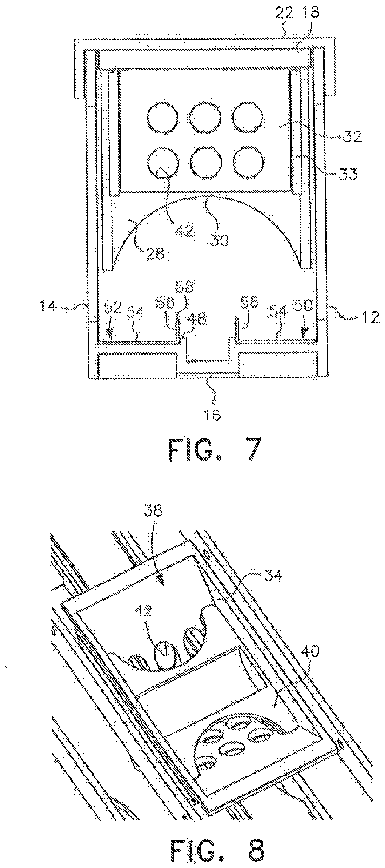

Also extending downwardly from the ceiling 18 is a center baffle 32, better seen in Figure 2 where a partial view of the trap body 20 is provided with the lid 22 and side wall 12 removed. The center baffle 32 extends downwardly toward the floor to create a height-restricted barrier substantially transverse to, and approximately midway along, the longitudinal length of the trap. The center baffle 32 in the embodiment shown tapers from a generally rectangular upper opening 34 into a V-shaped body 35 having an angled or pointed lower edge 36. This shape may be varied without departing from the intended scope of the invention. However, the upper opening 34 provides access to a hollow interior generally designated by reference numeral 38 within the baffle 32 that holds a bait cup 40 (see Figures 6 and 8). By removing the lid 22, the user can place bait in the bait cup 40 through the upper opening 34. Once in the cup and with the lid replaced, the bait cannot be stolen by the rodent while the smell of the bait is nonetheless able to spread throughout the trap through the vent openings 42 in the center baffle 32 (see Figure 7). The location of the bait in the center of the trap also assists in proper placement of the rodent prior to trap activation and, by providing access to the bait cup through the top of the trap, makes it easy for the user to introduce a variety of different kinds of bait and/or to remove the bait cup for cleaning.

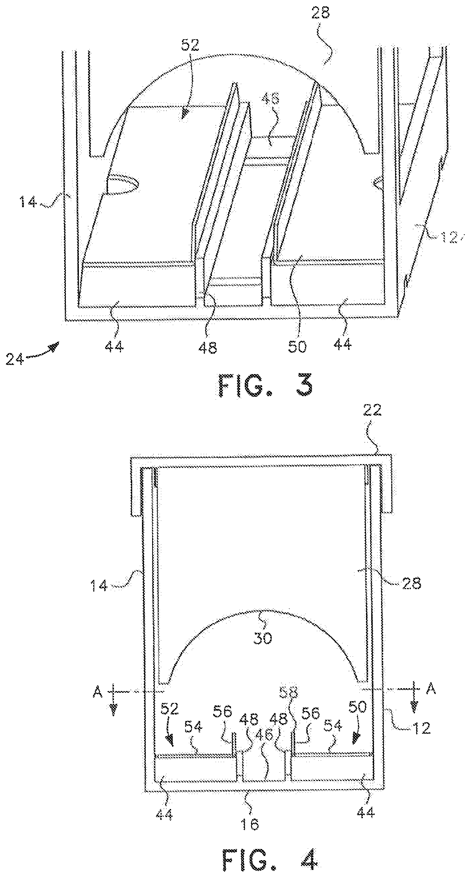

As best seen in Figures 3-5, the floor has two elevated tracks 44 that extend longitudinally along each side wall 12, 14. The width of each of the tracks is between about 0.1 inches and about 3.0 inches, and preferably about 0.75 inches for mice and about 0.875 inches for rats. The tracks 44 are separated by a channel 46 that runs at least part of the length of the trap body between the two entrances. The width of the channel 46 may be up to about 1.5 inches, and is preferably between about 0.1 inches and about 1.5 inches for rats and up to about 0.75 inches for mice and, more preferably, is about 0.5 inches for rats and about 0.375 inches for mice to provide a comfortable spacing for the average size of the rodent (rat or mouse) for which the trap is intended. The height of the elevated tracks 44 above the floor may be up to about 1.5 inches and is preferably about 0.5 inches. The tracks preferably include a further raised inner edge 48 that runs along and defines the sides of the central channel 46. The edge 48 may be integral with the tracks 44 or may be formed by a separate wall element.

The trap includes at least three killing plates including at least two oppositely charged lower plates generally designated by reference numerals 50, 52 arranged substantially parallel with one another and extending longitudinally through the trap on top of the elevated tracks 44. As shown, the parallel plates 50, 52 are generally perpendicular to the entrance openings 24, 26. The tracks and the plates thereon extend longitudinally within the trap body and adjacent a respective one of the side walls, with the width of the two lower plates being approximately the same as the width of the tracks upon which they are mounted.

The parallel arrangement of the two oppositely charged plates 50, 52 ensures that the rodent contacts both plates immediately upon entering the trap. With reference to the entrance 24 shown in Figure 3, upon entry to the trap the rodent contacts the right lower plate 50 with right front foot and the left lower plate 52 with left front foot, and the rodent stays in contact with both plates, including subsequent contact with the back feet, as it moves through the trap. The trap is not triggered, however, until contact is made with an elevated third plate which energizes all of the plates as will be described hereinafter.

The lower plates 50, 52 are generally L-shaped in cross-section, each having a first planar member 54 generally parallel with the floor central channel 46 and a second planar member 56 generally perpendicular to the first planar member 54 (see Figures 4 and 7). The two planar members 54, 56 are preferably formed by bending each plate 50, 52 about 90□, so that the second planar member 56 projects upwardly as a bent inner edge positioned adjacent, and generally parallel with, the respective raised inner edge 48 of the elevated track upon which the plate is supported. As shown, the upper edge 58 of the second planar member 56 extends upwardly beyond the upper edge of the raised inner edge 48, having a height of up to about 0.75 inches and preferably about 0.25 inches. The bent shape of the lower plates 50, 52 increases a rodent's contact with the lower plates as the rodent's feet are on the first planar member 54 while the second planar member 56 provides additional contact with the rodent near its chest and/or belly through its fur, particularly as the rodent squeezes under the entry baffle. This is advantageous both during trap activation, as the bent shape provides better contact with the rodent and also brings the shock closer to being across the rodent's chest/body for a quicker dispatch, and also for kill verification after trap activation.

With respect to the latter, the trap of the present invention, according to a preferred configuration, has remote monitoring capability and is configured to verify the continued presence of the rodent after a killing cycle before sending a kill notification to the user. This process is the same as that described in the '466 patent. However, unlike the flat plates in the '466 patent which may be degraded in resistance sensing capability due to dirt and debris on the plates creating poor contact, the upwardly directed second members 56 of the bent lower plates 50, 52 enable the trap to detect a resistance passed through the rodent's fur to their skin. This improves kill verification and the accuracy of remote monitoring.

The trap further includes a third or upper plate 33 which may be separate or built into the center baffle 32. The upper plate 33 of baffle 32 is the trigger plate that activates the trap's high voltage circuit to dispatch a rodent that is standing on the lower plates. Therefore, when a rodent enters the trap and contacts both lower plates 50, 52 the trap remains inactive. However, when the rodent is drawn toward the bait and touches the upper plate 33 on the baffle 32, such as with its nose, the trap is triggered and activates the upper plate along with the two lower plates in like manner as described in the three-killing-plate configuration of the '466 patent. The rodent will likely lose contact with the third plate during the killing cycle but the baffle 32 aids in keeping the rodent in the trap for the full duration of such cycle.

Placement of the upper plate 33 in the center of the trap ensures that the rodent is far enough into the trap to have proper contact with the lower plates 50, 52 on the raised tracks 44 before the trap is triggered. Once triggered, the entry baffle 28 (whichever one is behind the rodent) further enhances the rodent's positioning and contact with the plates, hitting the rodent in the mid-back which both prevents the rodent from jumping backwards out of the trap and forces the rodent into contact with the bent members 56 of the lower plates through its fur as well as with the planar members 54 upon which it is standing. For rats, the distance between the lower edge 30 of the baffle and the plates 50, 52 is between about 0.75 inches and about 3.0 inches. Within this range, the distance from the lower edge 30 of the baffle to the first planar member 54 is preferably about 1.4 inches, and to the upper edge of the second planar member 56 is about 1.2 inches. For mice, the distance between the lower edge 30 of the baffle and the plates 50, 52 is between about 0.25 inches and about 1.5 inches. Within this range, the distance from the lower edge 30 of the baffle to the first planar member 54 is preferably about 0.7 inches, and to the upper edge of the second planar member 56 is about 0.6 inches.

In addition to making sure that the rodent is sufficiently within the trap before the trap is triggered, the use of an elevated third plate, such as plate 33 adjacent the ceiling of the trap, and the requirement that the upper plate be contacted along with the lower plates before the trap is triggered, provides two significant benefits to trap operation.

First, the separation between the upper plate and the lower plates virtually ensures that the trap will not be activated by insects. By reducing or eliminating such false triggers, the number of incorrect notifications sent to a remote monitoring station by the trap are also reduced, saving the time and effort that would otherwise be expended in checking empty traps.

Second, and in conjunction with placement of the lower plates on the raised tracks, the trap in accordance with the present invention is resistant to being triggered by water. As a result, the trap may be used effectively in a "hose down" or outdoor environment with limited susceptibility to false triggers due to water contacting the lower plates, thereby further avoiding the generation of incorrect notifications sent to a remote monitoring station. Placement of the bait within the center baffle and under the lid also protects the bait from water in the event the user were to hose down the area around the trap.

Should the trap be triggered in a hose-down situation, such as by water bouncing off the positive lower plate and hitting the upper plate, the trap could complete a killing cycle. However, the gap between the raised plates would prevent water from bridging across the lower plates such that the resistance required to confirm a kill would be absent. As a result, false triggering of the trap is less likely to result in the sending of a confirmed kill notification.

Should a flooding situation occur such that the water level in the room rises to the point where the upper plate is contacted, all of the user's traps on the same level would be triggered at nearly the same time. Upon such an event, the pest controller can warn the user that another problem - beyond rodent control - has been experienced.

The raised parallel plates with upper trigger plate thus serve to make the trap less susceptible to false triggers and the sending of inaccurate kill notifications. By forcing the rodent to have at least one foot on both plates when the trap is triggered, and by delaying triggering until the rodent is sufficiently within the trap to contact the upper plate, the likelihood of a successful kill is enhanced.

According to a preferred embodiment of the present invention as shown in Figures 9-23, the electronic rodent trap is modular in design, providing enhanced durability and cost effective operation, particularly when implemented within a commercial pest control system and method.

More particularly, Figure 9 shows a modular electronic rodent trap generally designated by reference numeral 100 that includes an outer housing generally designated by reference numeral 102, with removable and replaceable inner components including an electronics module generally designated by reference numeral 104, and a tunnel assembly or tunnel module generally designated by reference numeral 106. The outer housing 102 includes a base 108, into which the electronics module 104 and tunnel module 106 are closely fitted adjacent one another, and a lid 110 that is closed and secured to the base when the trap is in use as shown in Figure 10. The lid 110 may be hinged to the base or may be fully separable from the base 108. In the embodiment shown, the outer housing base 108 has two access openings 112 that align with the two entrance openings 114 in the tunnel module 106 as shown. The base 108 may also includes inner ribs or alignment structures (not shown) to help position and secure the inner component modules to prevent sliding or shifting thereof within the outer housing.

The outer housing 102 protects the inner trap components, i.e., the electronics module 104 and the tunnel module 106, making the trap more resistant to possibly damaging conditions in the environment or associated with handling of the trap, while the modular design allows these inner components or modules to be removed and replaced separately by opening the lid of the outer housing. The lid 110 of the outer housing 102 is also preferably provided with a safety switch (not shown) that prevents the trap from being activated when the lid is open.

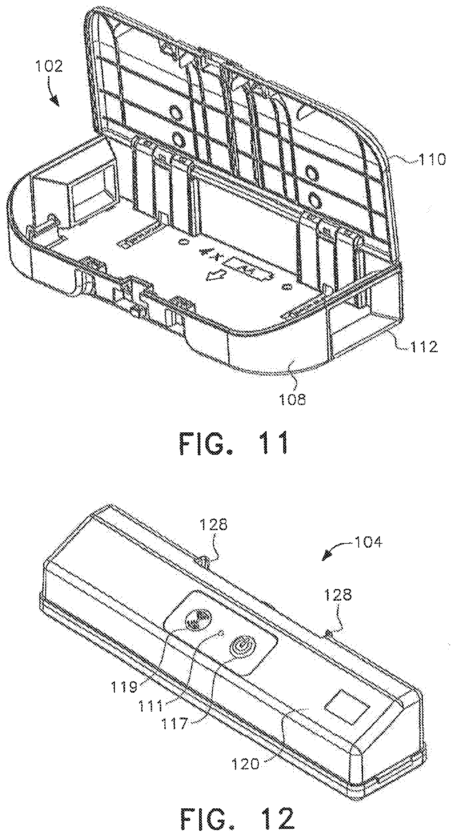

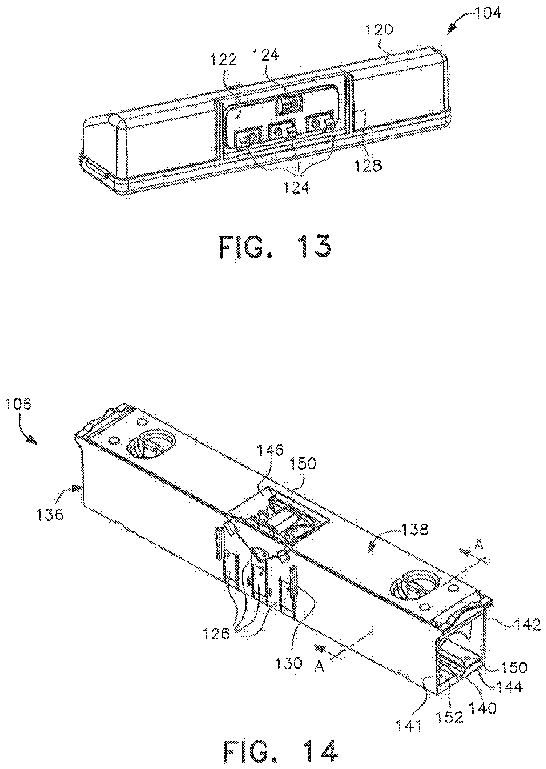

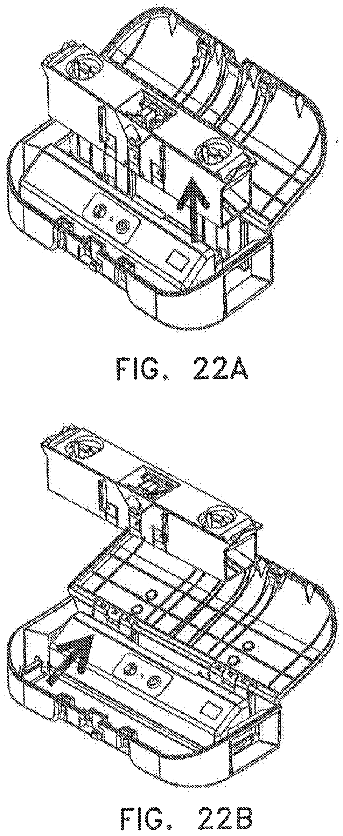

As shown in Figures 12 and 13, the removable electronics module 104 includes a waterproof electronics housing 120 that contains the high voltage circuitry used to power the killing plates that are positioned in the tunnel module 106. An outer wall 122 of the electronics housing is provided with electrical contacts 124 that are brought into active engagement with corresponding contacts 126 on the tunnel module 106 (see Figure 14). The contacts 126 on the tunnel module 106 are coupled to the killing plates inside the killing chamber when the trap is fully assembled. The outer wall 122 of the electronics housing 120 is also provided with flanges 128 that align with and slide into projecting channels 130 on the outer wall of the tunnel module to secure the housing 120 to the tunnel module and keep the contacts 124, 126 in firm connection when the trap is in use (see Figures 22A-22C for the inner component removal sequence). The outer wall 122 of the electronics housing 120 preferably includes a power-on button 117, an LED power indicator 111 and a trap wireless connection indicator 119.

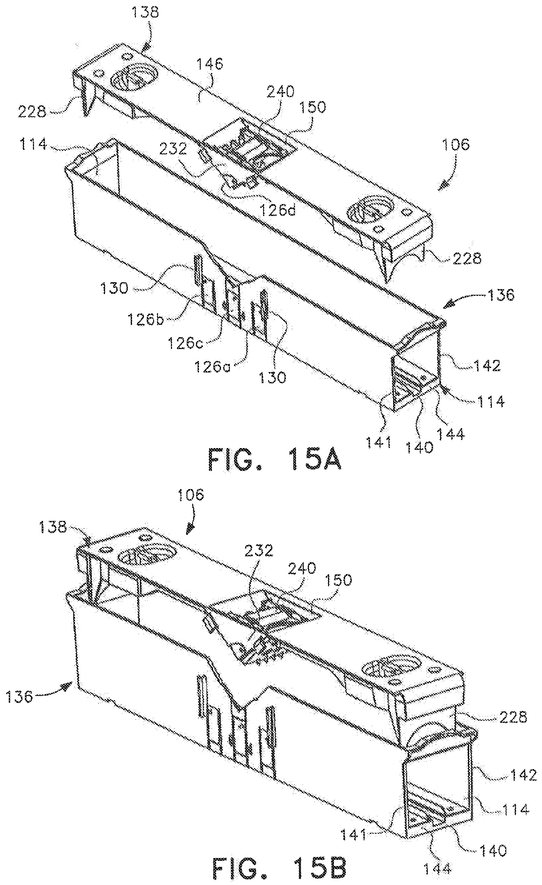

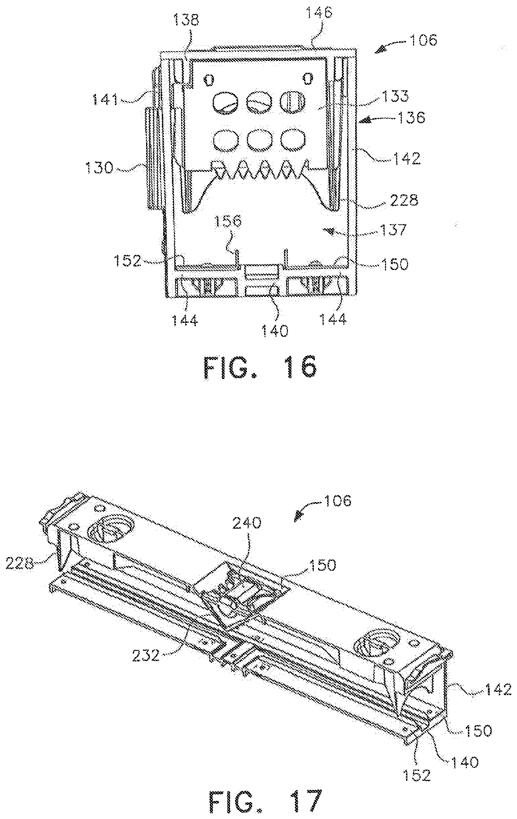

The tunnel module 106 as assembled is shown in Figure 14 and includes a tunnel base generally designated by reference numeral 136 and a removable cover panel generally designated by reference numeral 138. Figure 15A is an exploded view of the tunnel base 136 and cover panel 138, while Figure 15B shows the cover panel being put in place. The tunnel base 136 and cover panel 138 together form the tunnel module that defines the killing chamber generally designated by reference numeral 137 (see Figure 16).

The tunnel base 136 includes a floor 140 and two side walls 141, 142 extending between the opposed entrance openings 114. Alternatively, the cover panel could be constructed with the two side walls so as to fit onto the floor of the base. As shown, the contacts 126 are on side wall 141. The lower plates 150, 152 are positioned adjacent the floor 140 of the tunnel base, and are preferably on elevated tracks 144 above the floor, as has already been described. The entry baffles 228 and the center baffle 232 with the third plate 133 (see Figure 16) project from the inner or lower side of the cover panel 138 to extend downwardly into the killing chamber 137 when the cover panel 138 is secured to the tunnel base 136. As shown, the third plate 133 may be provided with a jagged or uneven lower edge. While not necessary, the jagged or toothed lower edge reduces the ability of the rodent to go under the baffle and plate without activating the trap as the teeth more readily get past the rodent's fur to make contact with its body. The outer or upper side 146 of the cover panel 138 includes an opening 150 into the center baffle 232 for receiving the bait cup 240.

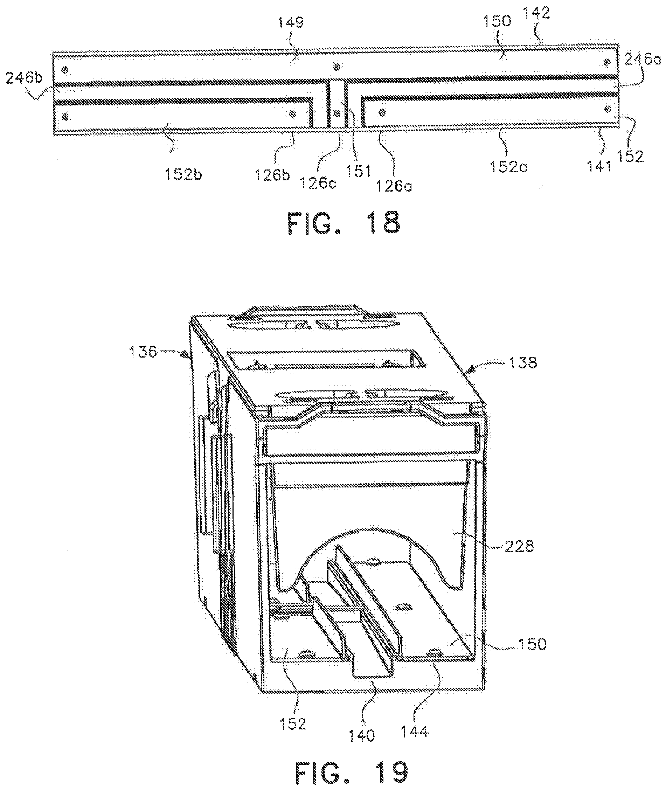

Figures 17-19 show the arrangement of the lower plates 150, 152 in the modular configuration illustrated herein. Plate 150 is T-shaped, having a long side 149 adjacent to and parallel with side wall 142 and a perpendicular stem 151 extending transverse to the longitudinal length of the trap and electrically coupled through side wall 141 to the electronics module 104. Plate 152 is made of two short plates 152a, 152b positioned adjacent side wall 141. The short plates 152a, 152b are electrically connected to one another inside the electronics module 104. As best seen in Figure 18, short plates 152a, 152b are connected with contacts 126a, 126b, respectively, while the perpendicular stem 151 of plate 150 is connected with contact 126c. The third plate 133 on the center baffle 232 is coupled to the upper contact 126d (see Figure 15A).

Plates 150, 152 are separated by channels 246a, 246b in like manner to the separation provided by channel 46 between plates 50, 52 as previously described herein. In addition, the plates 150, 152 are preferably bent at about 90□ with a planar portion lying flat on the raised tracks 144 and an upwardly directed edge portion 156 as in the embodiment already described in connection with Figures 1-8.

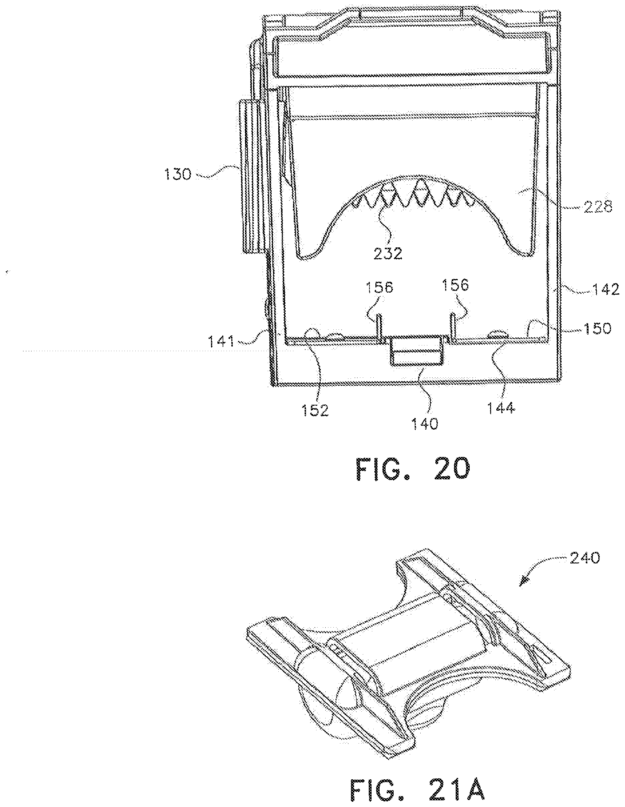

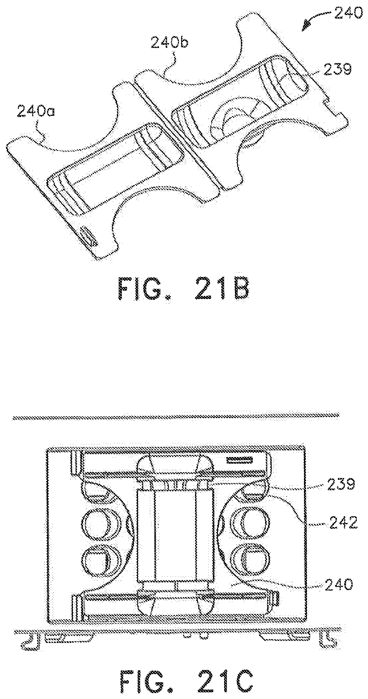

A bait cup 240 to be received in the opening 150 in the center baffle 232 is shown in Figure 21A and as positioned in the opening in Figure 21C. The bait cup 240 may be made of two halves 240a, 240b that snap fit together as shown in Figure 21B, but other designs are also possible. The two halves include vent slits 239 to allow for dispersal of scent from the bait while the center baffle also includes vent holes 242 as has already been described in connection with the embodiment shown in Figures 1-8.

As assembled, the electronics module 104 and the tunnel module 106 are fitted adjacent one another and enclosed within the outer housing 102. The electrical contacts 126 on the side wall 141 of the tunnel base 136 couple the killing plates 150, 152 to the contacts 124 on the electronics module housing 104. When the lid 110 of the outer housing 102 is closed, rodents may enter the killing chamber 137 through the aligned outer housing access openings 112 and tunnel module entrance openings 114 while the electronics module housing 120 keeps the high voltage circuit components safely isolated from rodent contact.

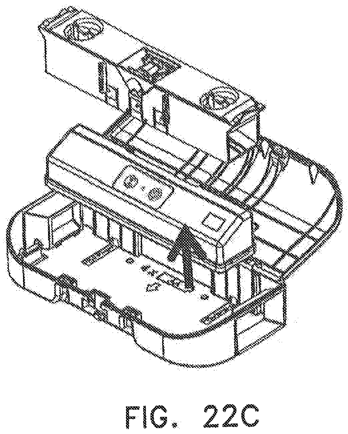

To disassemble the trap 100, the lid of the outer housing 102 is opened and the tunnel module 106 is pulled upwardly, disengaging the flanges 128 of the electronics housing 120 from the channels 130 on the tunnel module as shown in Figure 22A. The electronics module 104 is then pushed toward the back wall of the housing 102 to align with the access openings 112, Figure 22B, and lifted out, Figure 22C.

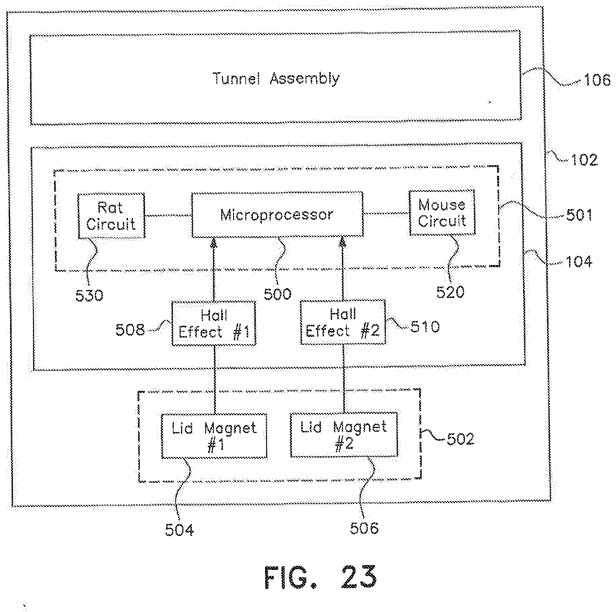

While the plates are enclosed within the tunnel module 106 making inadvertent user contact therewith unlikely, the electronics module is preferably operative with a safety switch 502, depicted in the block diagram of Figure 23, to ensure that a microprocessor 500 in the electronics module 104 will not activate the high voltage circuit 501 unless an input is sensed indicating that the lid of the outer housing 102 is closed. To increase the modularity of the trap, the safety switch 502 according to the present invention is configured to include two possible contact closures which may be represented by first and second lid magnets 504, 506, which are in communication with first and second Hall-effect devices 508, 510, respectively. Depending upon which magnet is engaged when the lid 110 of the outer housing 102 is closed, the safety switch 502 is operative to communicate with the microprocessor 500 via the respective Hall-effect device which configures the high voltage circuit 501 for operation using either the mouse circuit 520 or the rat circuit 530 portions of the high voltage circuit 501. Thus, when magnet 504 is contacted upon closure of the lid 110 of the outer housing 102, its associated Hall-effect device 508 is activated and tells the microprocessor 500 to activate the rat circuit 530. Conversely, when magnet 506 is contacted upon lid closure to activate Hall-effect device 510, the microprocessor 500 proceeds to activate the mouse circuit 520. In this way, mouse and rat trap versions of the electronic rodent trap according to the present invention as described herein, which have different dimensions in the tunnel assembly and overall trap footprint, may utilize a common electronics assembly 104 with both modes of operation being available, dependent upon the magnet closure engagement of the safety switch 502. With this modularity, the user can power both kinds of traps with the same electronics assembly 104, with reduced equipment costs and increased utilization of assets.

While illustrated with all of the features as just described, the present invention is also directed to any electronic rodent trap that includes the combination of a pair of spaced killing plates arranged substantially parallel with one another near the floor and extending along the longitudinal dimension of the trap and a third plate in an elevated position above the floor of the trap, with the third plate being the trigger plate. The elevated positioning of the third plate, and the requirement that both the lower plates and the upper plate be contacted to trigger the trap, may be used effectively with traps having shapes other than that of a tunnel, with traps having only a single door, with traps in which the lower plates are not raised above the floor or with traps that do not have a center baffle and/or entry baffles.

As has been described, it is preferable that the lower plates are bent at about 90□ with a planar portion lying flat on the raised tracks and an upwardly directed edge portion. The bent shape of the lower plates increases contact with the rodent, particularly when the trap is provided with entry baffles that force the rodent into contact with the upwardly bent edges of the lower plates with the baffles being positioned to contact the rodent in the mid-back when the rodent triggers the trap.

In addition, while a configuration in which the upper plate is part of a center baffle is preferable, the upper plate may be positioned alone, such as directly on the ceiling or on the side of the trap. If on the side of the trap, the upper plate should be spaced above the floor such as, for example, halfway up the side wall or higher. It is not expected that the rodent will remain in contact with the upper plate after triggering the trap, but will rather be dispatched by the activated lower plates. Therefore, the upper plate may be at various positions within the trap so long as sufficiently spaced above the lower plates to avoid triggering of the trap by water contacting the upper and lower plates simultaneously or by insects that, while crawling into the trap on the floor or on another surface, are typically not large enough to span a gap and contact two spaced surfaces at once.

While the modular configuration with parallel, longitudinally extending, killing plates as described herein is preferred, those skilled in the art will readily appreciate that the modular trap design disclosed herein, having separate electronics and tunnel modules with mating electrical contacts within an outer housing, could include tunnel modules in which the killing plates are arranged in series as shown in the '899, '466, and '657 patents. Therefore, the module design features of the present invention are to be understood as not being limited to electronic rodent traps having a parallel plate arrangement in the tunnel module.

Accordingly, the present invention may be directed to a modular electronic rodent trap including an outer housing that receives a removable electronics module and a removable killing chamber module having at least one entrance opening. The outer housing is provided with an access opening that aligns with the killing chamber module entrance opening when the trap is assembled with the two modules inside the outer housing.

The electronics module includes a waterproof or water resistant electronics housing that contains a power source and high voltage circuitry used to energize a plurality of killing plates, which may be in varying configurations, that are positioned in the killing chamber module. Electrical contacts on an outer wall of the electronics module housing are brought into mating engagement with electrical contacts on the outer wall of the killing chamber module to connect the power source and the high voltage circuitry in the electronics module with the killing plates in the killing chamber module when the trap is fully assembled with the outer housing protecting the inner modules.

Further, the present invention is intended to include any electronic rodent trap having a pair of spaced, substantially parallel plates extending longitudinally, i.e., perpendicular to the trap entrance, that are triggered by a separate triggering element positioned in an elevated position within the killing chamber of the trap. This triggering element may be a third plate or, alternatively, may be a mechanical switch as in U.S. Patent No. 7,690,147 ("the '147 patent"), or an infrared sensor as in U.S. Patent No. 7,757,430 ("the '430 patent"), or any other known sensor as would be considered suitable by persons skilled in the art.

Accordingly, the present invention may be directed to an electronic rodent trap having a trap body with a killing chamber accessed by an entrance opening and including a plurality of killing plates and an elevated triggering or sensing element. The plurality of killing plates includes at least two oppositely charged lower plates positioned adjacent a floor of the killing chamber and oriented substantially in parallel with one another, having at least portions thereof that extend longitudinally like train tracks oriented perpendicular to the entrance opening so that the rodent contacts one plate with its left feet and the other substantially parallel plate with its right feet, the longitudinally extending portions of the lower plates being separated from one another by a longitudinally extending channel.

The elevated triggering element is spaced above the floor and inwardly from the trap entrance opening, with activation of the high voltage circuitry being triggered when the rodent contacts the triggering element, such as with its nose, while standing with its left and right feet on the left and right lower parallel plates, respectively. The triggering element may be a third charged plate as has been disclosed herein, or may be a mechanical switch, IR sensor or the like, as would be known by skilled persons in the field of rodent traps as suitable for use in an electronic rodent trap.

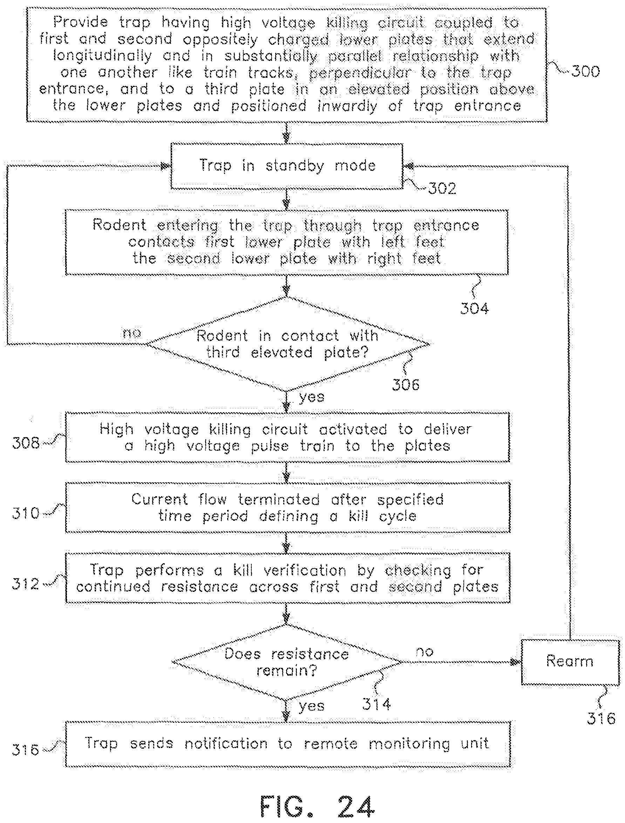

Further, the present invention includes a method of using and/or operating an electronic rodent trap of the types disclosed herein as summarized in Figure 24. The method includes providing an electronic rodent trap having a trap body with at least one entrance, a high voltage killing circuit coupled to first and second oppositely charged lower plates that extend longitudinally and in substantially parallel relationship with one another like train tracks, perpendicular to the trap entrance, and to a sensing or triggering element, such as a third plate, in an elevated position above the lower plates and positioned inwardly of the entrance, step 300. Place the trap in active standby mode by powering trap, step 302. With trap in active standby, a rodent entering the trap through the trap entrance contacts the first lower plate with at least one of its left feet and the second lower plate with at least one of its right feet, step 304. If the third plate is not contacted, step 306, the trap remains inactive and in standby mode. Upon the rodent making contact with the elevated sensing or triggering element, e.g., the third elevated plate, step 306, the high voltage killing circuit is automatically activated to deliver a high voltage pulse train to the first, second and third plates, step 308. Current flow is terminated after a specified time period defining a kill cycle, step 310, and the trap performs a kill verification by checking for continued resistance across the first and second plates, step 312. In the absence of resistance, step 314, the trap automatically rearms, step 316, and returns to standby mode, step 302. If resistance remains across the plates, step 314, the trap sends a notification to a remote monitoring unit that trap servicing is required, step 316. The elevated positioning of the third plate makes the method of operation more impervious to unwanted triggers and associated false notifications due to the presence of insects in the trap and/or water contamination. Additionally, to reduce the possibility of false notifications, such as due to the presence of water, the step of performing a kill verification is preferably performed after waiting for a time period following completion of the kill cycle to allow the water to drain from the lower plates.

The present invention is also directed to a method of monitoring a plurality of electronic rodent traps of the kind that has been described herein. The electronic rodent traps have remote monitoring capability substantially like that described in the '466 patent and the '657 patent. According to the method, a trap that has been triggered determines, upon completion of the killing cycle and after waiting a time period, whether a resistance consistent with a dispatched rodent remains across the lower plates. In the absence of such resistance, the trap resets and awaits the next interaction. If the resistance is detected, however, the trap sends a transmission to a remote monitoring station of the triggered trap status and of the need for trap servicing. Such a method, which is summarized according to one embodiment in the '466 patent and according to another embodiment in the '657 patent, is enhanced by the raised lower plates which reduce the likelihood that a false trigger, due for example to the chance contact of water with both the upper and lower plates simultaneously, will be subsequently confirmed since the water will likely not remain so as to bridge the two lower plates at the time of trap status verification. As a result, the number of incorrect trap status notifications sent to the remote monitoring station will be reduced.

Should a flooding situation occur in which the water level in the room has risen to cover the lower plates, all of the user's traps on the same level would indicate the need for servicing at the same time. The pest controller would understand such an outcome as indicative of a problem beyond rodent control and could advise the owner of the facility in which the traps are deployed accordingly.

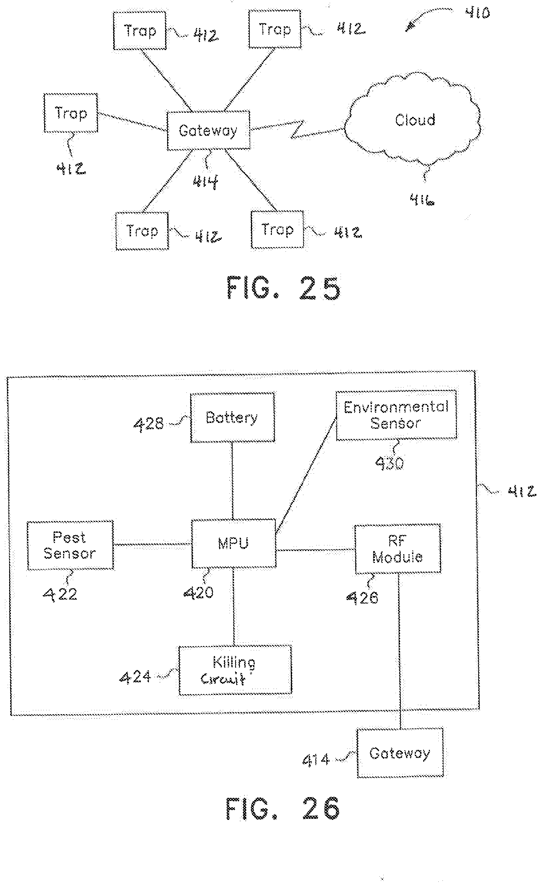

Incorporation of the modular electronic rodent trap, or any other electronic rodent trap configurations described herein, within a long range remote notification electronic rodent trap network, generally designated by reference numeral 410, is representatively depicted in Figure 25. The network 410 includes a plurality of electronic rodent trapping devices or traps 412 and a gateway 414 that can be arranged in a star-type network like that shown in which the traps communicate directly with the gateway 414 with no need for repeaters or intercommunication between the traps. The gateway can be configured to communicate with the cloud 416, enabling trap status to be monitored by users at virtually any location as is known by persons skilled in the art.

As shown in Figure 26, each of the traps 412 includes a microprocessing unit (MPU) 420 in communication with a rodent sensor 422, a killing circuit 424, and an RF module 426 by which the trap communicates with the gateway 414. Upon detecting the presence of a rodent with the pest sensor 422, the MPU 420 activates the killing circuit 424 to dispatch the rodent. The trap 412 also has a power source such as battery 428 and may further include an environmental sensor 430 that can be used to collect data in areas in which placement of such a sensor or sensors, on a dedicated basis, might otherwise be inconvenient or impractical, such as crawl spaces, attics or other relatively inaccessible locations where traps are often used effectively. While not necessary, equipping the trap with an environmental sensor 430, such as for ambient temperature, provides an extra functionality at minimal cost and no additional effort in terms of installation in the field.

The gateway 414 may be a public gateway operating on a protocol like that used with cellular devices in which cell phones communicate with cell towers not owned by the end user. Alternatively, the gateway 414 may be established by the owner of an individual system such that the network 410 over which the traps communicate is private. In this case, the owner purchases a long-range gateway and sets up a personal facility through which all of the trapping devices connect.

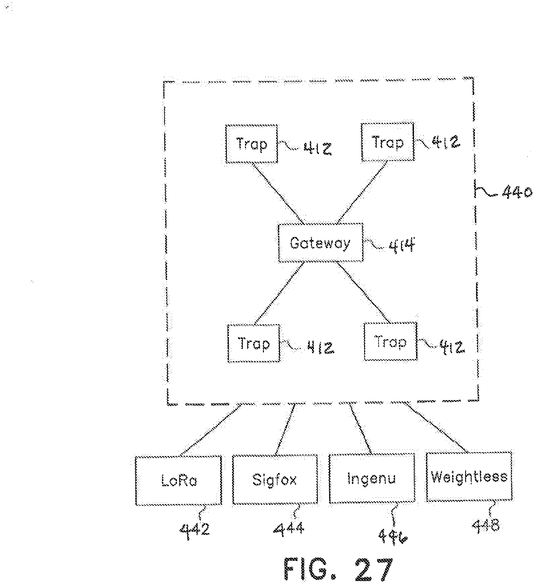

As depicted in Figure 27, the traps 412 communicate with at least one gateway 414 preferably within a low power wide area network (LPWAN) 440. Depending on the communication protocol used, the LPWAN 440 may be a LoRa network 442, a Sigfox network 444, an Ingenu network 446, a Weightless network 448, or other network used to provide machine to machine connections in the manner described herein. In connection with Figure 27, it is to be understood that the network types 442-448, which are shown as being "connected" to the LPWAN 440, are intended to represent, within a single drawing figure, alternative communication protocols that may be used individually in configuring the LPWAN 440.

According to the method of long range wireless communication using the electronic rodent traps described herein, the plurality of electronic trapping devices 412 send wireless transmissions including trap status data to the gateway 414. Using frequencies of less than 1 GHz, the traps are capable of reporting their status to the gateway over a distance of at least one mile away, with communication capability ranges extending outwardly on the order of up to about ten miles away, without the use of repeaters. The transmissions carry a small payload of not greater than 256 bytes, which optimizes range and battery life. As a result, the system and method of long range remote monitoring of electronic rodent traps of the types described herein allows for the monitoring of large commercial, urban, agricultural and residential areas while obviating the need for an infrastructure including complex networks of devices and repeaters. By eliminating the need to install permanent network components, system setup is fast as well as easily modifiable.

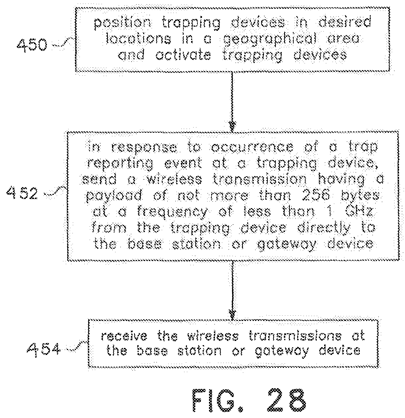

A flowchart of the method of remotely monitoring a plurality of electronic rodent traps through a base station or gateway device is set forth in Figure 28. The method includes positioning a plurality of traps in desired locations in a geographical area and activating the traps, step 450. In response to the occurrence of a trap reporting event at the trap, the trap sends a wireless transmission having a payload of not more than 256 bytes at a frequency of less than 1 GHz to the base station or gateway device, step 452, where it is received, step 454. The transmissions are sent directly to the base station or gateway device without using any intervening repeating devices. When positioning the plurality of traps, the traps may be in various locations at a range of up to 10 miles away from the base station or gateway device.

The occurrence of a trap reporting event, step 452, may include activation of the pest sensor 422, activation of the killing circuit 424, the elapsing of a preset time period between periodic trap status update transmissions, a low battery condition, and the like, with the understanding that the system and method may be configured to define other occurrences as "reporting events", i.e., events that initiate the sending of a transmission by the trap, as would be understood by persons of ordinary skill in the art. The operation of the traps following a transmission depends upon the nature of the reporting event as well as the specific configuration of the reporting trap.

Using a LPWAN with the traps described herein provides a system and method for monitoring electronic rodent traps with greatly increased range in a way not previously considered applicable to the field of rodent control devices which have a fixed location in use but which can be moved to, and then used in, a different location very easily. The long range gateway and trap communication using long range radio frequency modules described herein provide a degree of flexibility and ease of set up and use not previously available or contemplated in connection with electronic rodent trap monitoring systems and methods.

The foregoing descriptions and drawings should be considered as illustrative only of the principles of the invention.

## Claims

1. An electronic rodent trap (100,412) with remote notification capability comprising:
an outer housing (102) forming a trap body having two entrances (112), one on either end in opposed relationship to create a tunnel which allows a rodent to see longitudinally through the trap from one entrance to the other, and extending longitudinally between the trap entrances;
a removable tunnel module (106) configured to be received within the outer housing (102) and having opposed entrances (114) in alignment with the two entrances (112) of the trap body (102);
a removable electronics module (104) also configured to be received within the outer housing (102), the electronics module (104) containing a high voltage killing circuit (501) operative within the trap body, said killing circuit (501) including a plurality of plates that includes at least two oppositely charged lower killing plates (150,152) in substantially parallel relationship with one another and having at least portions thereof extending longitudinally within the trap body, said oppositely charged lower killing plates (150,152) being elevated above the floor (140) of the trap body on raised tracks, the raised tracks being separated by a channel (246a,246b) that forms a longitudinally extending gap separating the lower plates (150,152), and a triggering element (133) separate from the at least two lower plates (150,152) and spaced inwardly from the entrance (112,114) so that a rodent must enter the trap (100,412) before it can reach the triggering element (133), contact by the rodent with the triggering element (133) simultaneously with the lower plates (150,152) causing the high voltage killing circuit (501) to activate at least the two lower killing plates (150,152) and dispatch the rodent.

2. The remote notification electronic rodent trap (100,412) as set forth in claim 1, wherein the trap includes an RF module (426) for sending wireless transmissions to a base station or gateway device (414) at a frequency of less than 1 GHz, each wireless transmission having a payload of not more than 256 bytes.

3. The remote notification electronic rodent trap (100,412) as set forth in claim 2, wherein the trap (100,412) communicates over a low power wide area network (LPWAN) (440).

4. The remote notification electronic rodent trap (100,412) as set forth in claim 3, wherein the LPWAN (440) is selected from the group consisting of a LoRa network (442), a Sigfox network (444) and an Ingenu network (446).

5. A method of operating a modular electronic rodent trap (100,412) having remote notification capability comprising:
providing a modular electronic rodent trap (100,412) with modular components that include an outer housing (102) forming a trap body having two opposed entrances (112), a removable tunnel module configured to be received within the outer housing and having opposed entrances (114) in alignment with the two opposed entrances (112) of the trap body, the tunnel module (106) having at least first and second oppositely charged lower killing plates (150,152) and a triggering element (133), the lower plates (150,152) having portions that extend longitudinally and in substantially parallel relationship with one another like train tracks, and a removable electronics module (104) also configured to be received within the outer housing (102), the electronics module (104) containing a high voltage circuit (501) operatively coupled to said first and second oppositely charged lower killing plates (150,152);
assembling the modular components to configure the trap (100) for use and placing the trap in active standby mode, assembling the components including placing the electronics module (104) and the tunnel module (106) into the outer housing (102) while bringing outer contacts (124) on the electronics module into engagement with tunnel module contacts (126) located on an outer wall surface of the tunnel module (106) to electrically couple the lower plates (150,152) in the tunnel module (106) with the high voltage circuit (501) in the electronics module (104);
the trap (100,412) remaining in active standby mode when a rodent enters the trap through one of the trap entrances and contacts the first lower plate (150) with at least one of its left feet and the second lower plate (152) with at least one of its right feet but does not contact the triggering element (133);
the trap (100,412) automatically activating the high voltage killing circuit (501) to deliver a high voltage pulse train to the first and second plates (150,152) only when a rodent, while in contact with the first and second plates, touches the triggering element;
the trap (100,412) terminating current flow after a specified time period defining a kill cycle;
the trap (100,412) performing a kill verification by checking for continued resistance across the first and second plates (150,152); and
in response to detecting that resistance remains across the first and second plates (150,152), sending a notification to a remote device that trap servicing is required.

6. The method as set forth in claim 5, wherein the step of sending a notification includes sending wireless transmissions to a base station or gateway device (414) at a frequency of less than 1 GHz, each wireless transmission having a payload of not more than 256 bytes.

7. The method as set forth in claim 6, further comprising placing the modular trap (100,412) for operation within a low power wide area network (LPWAN) (440).

8. A remote notification electronic rodent trapping system including a plurality of electronic rodent traps (100,412) according to claims 1 to 4, comprising:
a base station or gateway device (414)
, wherein each of said plurality of electronic rodent traps (100,412) including an RF module (426) for sending wireless transmissions to the base station or gateway device (414) at a frequency of less than 1 GHz, each wireless transmission having a payload of not more than 256 bytes, said frequency and payload size providing long range wireless remote notification capability while communicating directly with the base station or gateway device (414).

9. The remote notification electronic rodent trapping system as set forth in claim 8, wherein the plurality of electronic rodent traps (100,412) communicate in a low power wide area network (LPWAN) (440).

10. The remote notification electronic rodent trapping system as set forth in claim 9, wherein the LPWAN (440) is selected from the group consisting of a LoRa network (442), a Sigfox network (444), and an Ingenu network (446).

11. The remote notification electronic rodent trapping system as set forth in claim 8, wherein each of the electronic rodent traps (100,412) further includes a pest sensor (422).

12. The remote notification electronic rodent trapping system as set forth in claim 8, wherein the lower plates (150,152) are electrically coupled with tunnel module contacts (124) on an outer wall surface of the tunnel module, said removable electronics module having an electronics housing with outer contacts (126) configured for engagement with the tunnel module contacts (124) to electrically couple the lower plates (150,152) in the killing chamber with the high voltage circuit (501) in the electronics module (104).

## Patentansprüche

1. Elektronische Nagetierfalle (100, 412) mit Fernbenachrichtigungsfunktion, die umfasst:
ein äußeres Gehäuse (102), das einen Fallenkörper bildet, der zwei Eingänge (112) aufweist, d.h. einen an beiden Enden in einander gegenüberliegender Beziehung, um einen Tunnel zu schaffen, der es einem Nagetier ermöglicht, von einem Eingang zum anderen in Längsrichtung durch die Falle zu sehen, und der sich in Längsrichtung zwischen den Eingängen der Falle erstreckt;
ein entnehmbares Tunnelmodul (106), das so ausgeführt ist, dass es im Inneren des äußeren Gehäuses (102) aufgenommen wird, und das gegenüberliegende Eingänge (114) aufweist, die auf die zwei Eingänge (112) des Fallenkörpers (102) ausgerichtet sind;
ein entnehmbares Elektronikmodul (104), das ebenfalls so ausgeführt ist, dass es im Inneren des äußeren Gehäuses (102) aufgenommen wird, wobei das Elektronikmodul (104) einen Hochspannungs-Tötungsstromkreis (501) einschließt, der im Inneren des Fallenkörpers wirksam wird, der Tötungsstromkreis (501) eine Vielzahl von Platten, die wenigstens zwei entgegengesetzt geladene untere Tötungsplatten (150, 152) in einer im Wesentlichen parallelen Beziehung zueinander aufweist, wobei sich wenigstens Abschnitte derselben in Längsrichtung im Inneren des Fallenkörpers erstrecken, die entgegengesetzt geladenen unteren Tötungsplatten (150, 152) auf erhabenen Schienen über den Boden (140) des Fallenkörpers erhöht sind, die erhabenen Schienen durch eine Rinne (246a, 246b) getrennt werden, die einen in Längsrichtung verlaufenden Zwischenraum bildet, der die unteren Platten (150, 152) trennt, sowie ein Auslöseelement (133) aufweist, das von den wenigstens zwei unteren Platten (150, 152) getrennt und von dem Eingang (112, 114) so nach innen beabstandet ist, dass ein Nagetier in die Falle (100, 412) eindringen muss, bevor es das Auslöseelement (133) erreichen kann, und wobei Kontakt des Nagetiers mit dem Auslöseelement (133) simultan mit den unteren Platten (150, 152) bewirkt, dass der Hochspannungs-Tötungsstromkreis (501) wenigstens die zwei unteren Tötungsplatten (150, 152) aktiviert und das Nagetier tötet.

2. Elektronische Nagetierfalle (100, 412) mit Fernbenachrichtigung nach Anspruch 1, wobei die Falle ein HF-Modul (426) zum Senden drahtloser Übertragungen zu einer Basisstation oder einer Gateway-Vorrichtung (414) bei einer Frequenz von weniger als 1 GHz aufweist, und jede drahtlose Übertragung eine Nutzinformation von nicht mehr als 256 Bytes aufweist.

3. Elektronische Nagetierfalle (100, 412) mit Fernbenachrichtigung nach Anspruch 2, wobei die Falle (100, 412) über ein Niedrigenergie-Weitverkehrsnetz (LPWAN) (440) kommuniziert.

4. Elektronische Nagetierfalle (100, 412) mit Fernbenachrichtigung nach Anspruch 3, wobei das LPWAN (440) aus der Gruppe ausgewählt wird, die aus einem LoRa-Netzwerk (442), einem Sigfox-Netzwerk (444) und einem Ingenu-Netzwerk (446) besteht.

5. Verfahren zum Betreiben einer modularen elektronischen Nagetierfalle (100, 412) mit Fernbenachrichtigungsfunktion, das umfasst:
Bereitstellen einer modularen elektronischen Nagetierfalle (100, 412) mit modularen Komponenten, die ein äußeres Gehäuse (102), das einen Fallenkörper mit zwei einander gegenüberliegenden Eingängen (112) bildet, ein entnehmbares Tunnelmodul, das so ausgeführt ist, dass es im Inneren des äußeren Gehäuses aufgenommen wird, und gegenüberliegende Eingänge (114) aufweist, die auf die zwei gegenüberliegenden Eingänge (112) des Fallenkörpers ausgerichtet sind, wobei das Tunnelmodul (106) wenigstens eine erste und eine zweite, entgegengesetzt geladene untere Tötungsplatte (150, 152) sowie ein Auslöseelement (133) aufweist, wobei die unteren Platten (150, 152) Abschnitte aufweisen, die sich in Längsrichtung und in im Wesentlichen paralleler Beziehung zueinander wie Eisenbahnschienen erstrecken, sowie ein entnehmbares Elektronikmodul (104), das ebenfalls so ausgeführt ist, dass es im Inneren des äußeren Gehäuses (102) aufgenommen wird, wobei das Elektronikmodul (104) einen Hochspannungsstromkreis (501) enthält, der funktional mit der ersten und der zweiten entgegengesetzt geladenen unteren Tötungsplatte (150, 152) gekoppelt ist;
Zusammensetzen der modularen Komponenten, um die Falle (100) zum Einsatz auszulegen, und Versetzen der Falle in einen aktiven Bereitschaftsmodus, wobei Zusammensetzen der Komponenten einschließt, dass das Elektronikmodul (104) und das Tunnelmodul (106) in das äußere Gehäuse (102) eingesetzt werden und dabei äußere Kontakte (124) an dem Elektronikmodul in Eingriff mit Tunnelmodul-Kontakten (126) gebracht werden, die sich an einer Außenwandfläche des Tunnelmoduls (106) befinden, um die unteren Platten (150, 152) in dem Tunnelmodul (106) elektrisch mit dem Hochspannungsstromkreis (501) in dem Elektronikmodul (104) zu koppeln;
wobei die Falle (100, 412) in dem aktiven Bereitschaftsmodus verbleibt, wenn ein Nagetier über den Fallen-Eingang in die Falle eindringt und mit wenigstens einem seiner linken Füße mit der ersten unteren Platte (150) sowie mit wenigstens einem seiner rechten Füße mit der zweiten unteren Platte (152), jedoch nicht mit dem Auslöseelement (133) in Kontakt kommt;
die Falle (100, 412) automatisch den Hochspannungs-Tötungsstromkreis (501) aktiviert, um nur dann eine Hochspannungs-Impulsfolge an die erste und zweite Platte (150, 152) auszugeben, wenn ein Nagetier, während es in Kontakt mit der ersten und der zweiten Platte ist, das Auslöseelement berührt;
die Falle (100, 412) Stromfluss nach einer bestimmten Zeitspanne beendet, die einen Tötungs-Zyklus definiert;
die Falle (100, 412) eine Tötungs-Bestätigung durchführt, indem sie auf anhaltenden Widerstand über die erste und die zweite Platte (150, 152) prüft; und
Senden einer Benachrichtigung dahingehend, dass Wartung der Falle erforderlich ist, an eine entfernte Vorrichtung in Reaktion darauf, dass festgestellt wird, dass Widerstand über die erste und die zweite Platte (150, 152) anhält.

6. Verfahren nach Anspruch 5, wobei der Schritt des Sendens einer Benachrichtigung Senden von drahtlosen Übertragungen zu einer Basisstation oder einer Gateway-Vorrichtung (414) mit einer Frequenz von weniger als 1 GHz einschließt und jede drahtlose Übertragung eine Nutzinformation von nicht mehr als 156 Bytes aufweist.

7. Verfahren nach Anspruch 6, das des Weiteren Positionieren der modularen Falle (100, 412) für Betrieb innerhalb eines Niedrigenergie-Weitverkehrsnetzes (LPWAN) (440) umfasst.

8. Elektronisches Nagetierfallensystem mit Fernbenachrichtigung, das eine Vielzahl elektronischer Nagetierfallen (100, 412) nach den Ansprüchen 1 bis 4 einschließt, wobei es umfasst:
eine Basisstation oder Gateway-Vorrichtung (414),
wobei jede der Vielzahl elektronischer Nagetierfallen (100, 412) ein HF-Modul (426) zum Senden drahtloser Übertragungen zu der Basisstation oder Gateway-Vorrichtung (414) bei einer Frequenz von weniger als 1 GHz aufweist, jede drahtlose Übertragung eine Nutzinformation von nicht mehr als 256 Bytes aufweist und die Frequenz sowie die Größe der Nutzinformation eine Drahtlos-Fernbenachrichtigungsfunktion großer Reichweite bereitstellen, wenn direkt mit der Basisstation oder der Gateway-Vorrichtung (414) kommuniziert wird.

9. Elektronisches Nagetierfallensystem mit Fernbenachrichtigung nach Anspruch 8, wobei die Vielzahl elektronischer Nagetierfallen (100, 412) in einem Niedrigenergie-Weitverkehrsnetz (LPWAN) (440) kommunizieren.

10. Elektronisches Nagetierfallensystem mit Fernbenachrichtigung nach Anspruch 9, wobei das LPWAN (440) aus der Gruppe ausgewählt wird, die aus einem LoRa-Netzwerk (442), einem Sigfox-Netzwerk (444) und einem Ingenu-Netzwerk (446) besteht.

11. Elektronisches Nagetierfallensystem mit Fernbenachrichtigung nach Anspruch 8, wobei jede der elektronischen Nagetierfallen (100, 412) des Weiteren einen Schädlingssensor (422) aufweist.

12. Elektronisches Nagetierfallensystem mit Fernbenachrichtigung nach Anspruch 8, wobei die unteren Platten (150, 152) elektrisch mit Tunnelmodul-Kontakten (124) an einer Außenwandfläche des Tunnelmoduls gekoppelt sind, und das entnehmbare Elektronikmodul ein Elektronikgehäuse mit äußeren Kontakten (126) aufweist, die für Eingriff mit den Tunnelmodul-Kontakten (124) zum elektrischen Koppeln der unteren Platten (150, 152) in der Tötungskammer mit dem Hochspannungsstromkreis (501) in dem Elektronikmodul (104) ausgeführt sind.

## Revendications

1. Piège électronique à rongeurs (100, 412) ayant une capacité de notification à distance, comprenant :
un boîtier externe (102) formant un corps de piège ayant deux entrées (112), une à chaque extrémité selon une relation opposée de manière à créer un tunnel permettant à un rongeur de voir longitudinalement à travers le piège d'une entrée à l'autre, et s'étendant longitudinalement entre les entrées de piège ;
un module tunnel amovible (106) configuré pour être reçu dans le boîtier externe (102) et ayant des entrées opposées (114) alignées avec les deux entrées (112) du corps de piège (102) ;
un module électronique amovible (104) également configuré pour être reçu dans le boîtier externe (102), le module électronique (104) contenant un circuit de mise à mort à haute tension (501) fonctionnant dans le corps de piège, ledit circuit de mise à mort (501) comportant une pluralité de plaques comportant au moins deux plaques de mise à mort inférieures (150, 152) chargées de manière opposée, selon une relation sensiblement parallèle l'une à l'autre et ayant au moins des portions de celles-ci s'étendant longitudinalement dans le corps de piège, lesdites plaques de mise à mort inférieures (150, 152) chargées de manière opposée étant élevées au-dessus du plancher (140) du corps de piège sur des rails surélevés, les rails surélevés étant séparés par un canal (246a, 246b) formant un interstice s'étendant longitudinalement séparant les plaques inférieures (150, 152), et un élément de déclenchement (133) séparé des au moins deux plaques inférieures (150, 152) et espacé vers l'intérieur par rapport à l'entrée (112, 114) de sorte qu'un rongeur doit pénétrer dans le piège (100, 412) avant de pouvoir atteindre l'élément de déclenchement (133), un contact du rongeur avec l'élément de déclenchement (133) simultanément avec les plaques inférieures (150, 152) provoquant l'activation du circuit de mise à mort à haute tension (501) au niveau d'au moins les deux plaques de mise à mort inférieures (150, 152) et l'élimination du rongeur.

2. Piège électronique à rongeurs à notification à distance (100, 412) selon la revendication 1, dans lequel le piège comporte un module RF (426) destiné à envoyer des transmissions sans fil vers une station de base ou un dispositif passerelle (414) à une fréquence inférieure à 1 GHz, chaque transmission sans fil ayant une charge utile de pas plus de 256 octets.

3. Piège électronique à rongeurs à notification à distance (100, 412) selon la revendication 2, dans lequel le piège (100, 412) communique sur un réseau étendu à faible consommation (LPWAN) (440).

4. Piège électronique à rongeurs à notification à distance (100, 412) selon la revendication 3, dans lequel le réseau LPWAN (440) est choisi dans le groupe constitué d'un réseau LoRa (442), d'un réseau Sigfox (444) et d'un réseau Ingenu (446).

5. Procédé de fonctionnement d'un piège électronique à rongeurs modulaire (100, 412) ayant une capacité de notification à distance, comprenant :
la fourniture d'un piège électronique à rongeurs modulaire (100, 412) ayant des composants modulaires qui comportent un boîtier externe (102) formant un corps de piège ayant deux entrées opposées(112), un module tunnel amovible configuré pour être reçu dans le boîtier externe et ayant des entrées opposées (114) alignées avec les deux entrées opposées (112) du corps de piège, le module tunnel (106) comportant au moins des première et seconde plaques de mise à mort inférieures (150, 152) chargées de manière opposée et un élément de déclenchement (133), les plaques inférieures (150, 152) ayant des portions s'étendant longitudinalement et selon une relation sensiblement parallèle l'une à l'autre comme des rails de chemin de fer, et un module électronique amovible (104) également configuré pour être reçu dans le boîtier externe (102), le module électronique (104) contenant un circuit à haute tension (501) couplé de manière opérationnelle auxdites première et seconde plaques de mise à mort inférieures (150, 152) chargées de manière opposée ;
l'assemblage des composants modulaires pour configurer le piège (100) pour utiliser et placer le piège en mode veille active, l'assemblage des composants comportant la mise en place du module électronique (104) et du module tunnel (106) dans le boîtier externe (102) tout en amenant des contacts externes (124) sur le module électronique en prise avec des contacts de module tunnel (126) situés sur une surface de paroi externe du module tunnel (106) afin de coupler électriquement les plaques inférieures (150, 152) dans le module tunnel (106) avec le circuit à haute tension (501) dans le module électronique (104) ;
le maintien du piège (100, 412) en mode veille active lorsqu'un rongeur pénètre dans le piège par l'une des entrées de piège et contacte la première plaque inférieure (150) avec au moins une de ses pattes gauches et la seconde plaque inférieure (152) avec au moins une de ses pattes droites, mais ne contacte pas l'élément de déclenchement (133) ;
l'activation automatique par le piège (100, 412) du circuit de mise à mort à haute tension (501) afin de délivrer un train d'impulsions à haute tension aux première et seconde plaques (150, 152) uniquement lorsqu'un rongeur, tout en étant en contact avec les première et seconde plaques, touche l'élément de déclenchement ;
l'arrêt par le piège (100, 412) du flux de courant après une période de temps spécifiée définissant un cycle de mise à mort ;
la réalisation par le piège (100, 412) d'une vérification de mise à mort par contrôle d'une résistance continue à travers les première et seconde plaques (150, 152) ; et
en réponse à la détection qu'une résistance demeure entre les première et seconde plaques (150, 152), l'envoi d'une notification à un dispositif à distance indiquant qu'une intervention sur le piège est requise.

6. Procédé selon la revendication 5, dans lequel l'étape d'envoi d'une notification comporte l'envoi de transmissions sans fil vers une station de base ou un dispositif passerelle (414) à une fréquence inférieure à 1 GHz, chaque transmission sans fil ayant une charge utile de pas plus de 256 octets.

7. Procédé selon la revendication 6, comprenant en outre le placement du piège modulaire (100, 412) pour fonctionnement au sein d'un réseau étendu à faible consommation (LPWAN) (440).

8. Système électronique de piégeage de rongeurs à notification à distance comportant une pluralité de pièges électroniques à rongeurs (100, 412) selon les revendications 1 à 4, comprenant :
une station de base ou un dispositif passerelle (414),
dans lequel chacun de ladite pluralité de pièges électroniques à rongeurs (100, 412) comporte un module RF (426) destiné à envoyer des transmissions sans fil vers la station de base ou le dispositif passerelle (414) à une fréquence inférieure à 1 GHz, chaque transmission sans fil ayant une charge utile de pas plus de 256 octets, ladite fréquence et ladite taille de charge utile assurant une capacité de notification à distance sans fil à longue portée tout en communiquant directement avec la station de base ou le dispositif passerelle (414).

9. Système électronique de piégeage de rongeurs à notification à distance selon la revendication 8, dans lequel la pluralité de pièges électroniques à rongeurs (100, 412) communique dans un réseau étendu à faible consommation (LPWAN) (440).

10. Système électronique de piégeage de rongeurs à notification à distance selon la revendication 9, dans lequel le réseau LPWAN (440) est choisi dans le groupe constitué d'un réseau LoRa (442), d'un réseau Sigfox (444) et d'un réseau Ingenu (446).

11. Système électronique de piégeage de rongeurs à notification à distance selon la revendication 8, dans lequel chacun des pièges électroniques à rongeurs (100, 412) comporte en outre un capteur de nuisibles (422).

12. Système électronique de piégeage de rongeurs à notification à distance selon la revendication 8, dans lequel les plaques inférieures (150, 152) sont couplées électriquement à des contacts de module tunnel (124) sur une surface de paroi externe du module tunnel, ledit module électronique amovible ayant un boîtier d'électronique avec des contacts externes (126) configurés pour venir en prise avec les contacts de module tunnel (124) afin de coupler électriquement les plaques inférieures (150, 152) dans la chambre de mise à mort avec le circuit à haute tension (501) dans le module électronique (104).
